(19) Europäisches Patentamt / European Patent Office / Office européen des brevets

(11) **EP 2 054 245 B1**

(12) **FASCICULE DE BREVET EUROPEEN**

(45) Date de publication et mention
de la délivrance du brevet:
**06.10.2010 Bulletin 2010/40**

(21) Numéro de dépôt: **07787522.7**

(22) Date de dépôt: **13.07.2007**

(51) Int Cl.:
***B60C 11/04*** (2006.01)

(86) Numéro de dépôt international:
**PCT/EP2007/057254**

(87) Numéro de publication internationale:
**WO 2008/017569 (14.02.2008 Gazette 2008/07)**

(54) **SCULPTURE DE BANDE DE ROULEMENT POUR VEHICULES DE TRANSPORT DE CHARGES LOURDES**

LAUFFLÄCHENAUSFÜHRUNG FÜR SCHWERLASTTRANSPORTFAHRZEUGE

TREAD DESIGN FOR HEAVY-LOAD TRANSPORT VEHICLES

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **08.08.2006 FR 0607268**

(43) Date de publication de la demande:
**06.05.2009 Bulletin 2009/19**

(73) Titulaires:
• **Société de Technologie Michelin
63000 Clermont-Ferrand (FR)**
• **Michelin Recherche et Technique S.A.
1763 Granges-Paccot (CH)**

(72) Inventeur: **BODIN, Jean Matthieu
63400 Chamalieres (FR)**

(74) Mandataire: **Diernaz, Christian
M. F. P. Michelin,
23, place des Carmes Dechaux,
SGD/LG/PI-F35-Ladoux
63040 Clermont-Ferrand Cedex 09 (FR)**

(56) Documents cités:
**EP-A2- 1 120 294      WO-A-01/39994
DE-A1- 3 522 967      FR-A1- 2 411 094
JP-A- 7 052 611        US-A- 4 649 976
US-A- 5 385 187        US-B1- 6 263 933**

## Description

L'invention concerne des pneumatiques pour véhicules de transport de charges lourdes ; cette invention concerne plus particulièrement la bande de roulement de tels pneumatiques.

Sur les véhicules d'exploitation de mines, de carrières ou de chantier de construction, tels que des chargeuses (loaders), des tombereaux (dumpers) ou des décapeuses (scrapers), il est connu que les charges portées par chaque pneumatique varient de manière sensible en fonction des conditions d'usage puisqu'il arrive à ces véhicules de rouler avec une faible charge ("à vide") et à pleine charge ("pleine charge"). Dans de tels cas, les variations de charge sur les pneumatiques peuvent aller de 40% à 80% de la charge nominale définie pour la dimension concernée par les Normes E.T.R.T.O. (The European Tyre and Rim Technical Organisation).

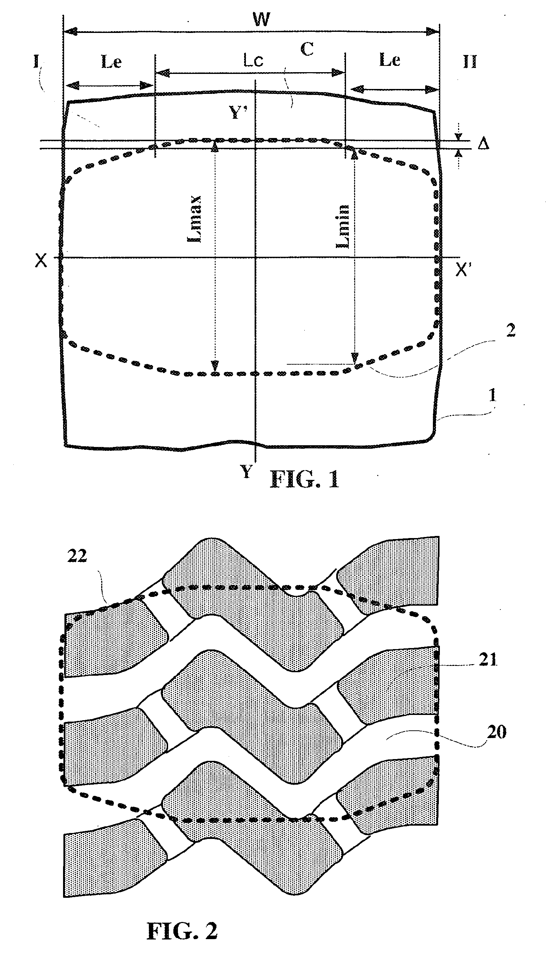

Ces deux conditions extrêmes d'utilisation conduisent à des formes d'empreinte de contact du pneumatique avec la chaussée qui sont elles aussi très variables puisque l'on peut passer d'une forme globale sensiblement rectangulaire à une forme qui ne l'est plus. Dans ce dernier cas, l'empreinte présente une partie médiane rectangulaire prolongée axialement de part et d'autre par des formes sensiblement trapézoïdales (voir figure 1).

Il a été constaté que ces variations de géométries de contact combinées aux éléments de relief de la bande de roulement conduisent à l'apparition de vibrations lors du roulage du pneumatique. En effet, les arêtes des éléments de sculpture peuvent avoir des orientations proches ou égales à l'orientation des extrémités des empreintes de contact sur les bords.

Pour réduire cet inconvénient, il a été maintes fois recherché dans l'art antérieur des moyens pour limiter les variations de géométrie d'empreinte sous des conditions de charge différentes.

Un objet de l'invention est de proposer une bande de roulement dont l'agencement et la géométrie des motifs de reliefs permettent de résoudre le problème mentionné, à savoir obtenir une réduction sensible des vibrations en roulage dans toute l'étendue des charges pouvant être supportées par un pneumatique et cela malgré les variations de géométrie d'empreinte de contact.

Selon l'invention, la bande de roulement d'un pneumatique pour véhicules de transport de charges élevées comprend une pluralité d'éléments de relief, cette bande de roulement étant divisée dans la direction axiale en trois parties, une partie centrale et axialement de part et d'autre une première partie de bord et une seconde partie de bord.

La partie centrale de la bande de roulement a une largeur Le qui est déterminée comme la région de la bande de roulement dont l'empreinte de contact présente, entre la longueur maximale de contact et la longueur minimale de contact, une différence au plus égale à 0.5% de la largeur totale W de l'empreinte (sous condition de charge égale à 0.40 fois la charge nominale E.T.R.T.O. et à pression nominale E.T.R.T.O.).

Les première et seconde parties de bord comprennent des éléments de relief disposés suivant un pas Pe égal à la circonférence moyenne du bord considéré divisée par le nombre d'éléments de relief sur le bord considéré, la circonférence moyenne étant mesurée sur la partie médiane dudit bord au point radialement le plus à l'extérieur lorsque le pneumatique est monté sur sa jante nominale et gonflé à sa pression nominale, les éléments de relief de chaque partie de bord présentant une ligne d'arêtes d'attaque et une ligne d'arêtes de fuite.

Document EP 1120294 décrit une telle bande de roulement, conforme au préambule de la revendication.

Cette bande de roulement du pneumatique est caractérisée en ce que les lignes d'arêtes des éléments de relief de la première partie de bord ont des profils qui ne sont pas superposables aux profils des lignes d'arêtes des éléments de relief de la seconde partie de bord, que se soit par symétrie centrale dans le cas d'une bande de roulement non directionnelle ou par symétrie axiale dans le cas d'une bande de roulement directionnelle, et en ce que la différence entre la valeur absolue de l'angle de la direction moyenne de chaque ligne d'arêtes d'un élément de relief de la première partie de bord et chacune des valeurs absolues des angles des directions moyennes des lignes d'arêtes de chaque élément de relief de la seconde partie de bord est au moins égale à 10 degrés et au plus égale à 20 degrés.

En outre, la surface totale de contact des éléments de relief des parties de bord dans une fenêtre de largeur égale à la largeur W de la bande de roulement (égale à la largeur de l'empreinte) de longueur circonférentielle égale au pas Pe des éléments de relief des parties de bord est constante ou quasiment constante (l'écart relatif entre la valeur minimale et la valeur maximale de la surface totale au sol est au plus de 5%), cette surface totale de contact des éléments de relief étant égale à la somme des surfaces de contact des éléments de relief des première et seconde parties de bord.

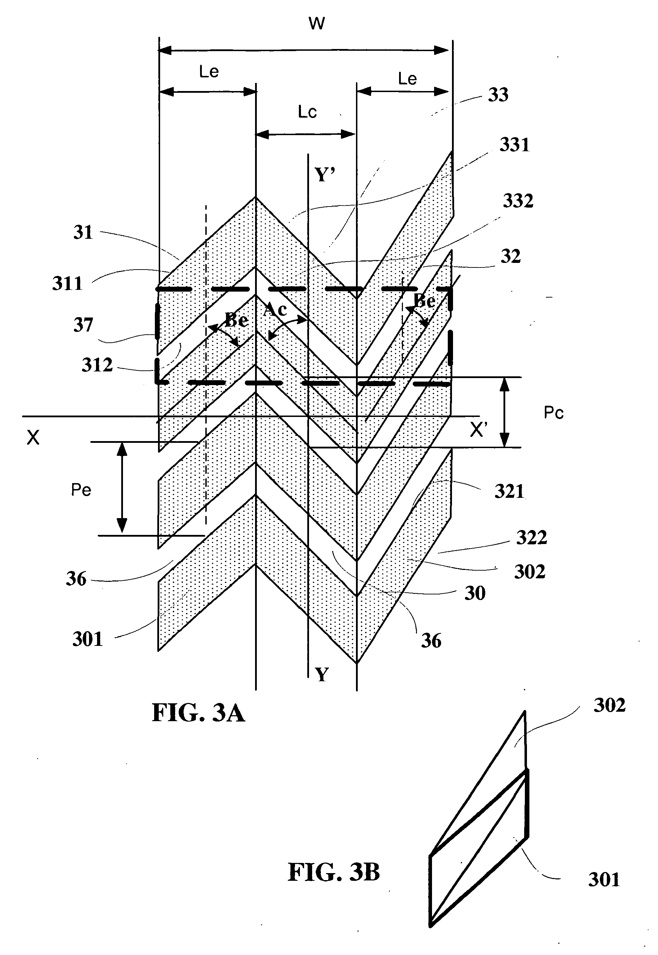

Une bande de roulement est dite non directionnelle quand le dessin des éléments de relief vu en plan n'implique pas de sens de roulage préférentiel (par exemple un motif global en S comme sur la figure 3). Une bande de roulement est dite directionnelle dès lors que le dessin des éléments de relief vu en plan implique un sens de roulage préférentiel (par exemple le motif général en V).

. Il est préférentiel que sur chaque partie de bord, la relation suivante soit satisfaite :

$$Be = Arctan(\frac{Le}{Pe})$$

où Be est l'angle moyen des arêtes des éléments de relief de la partie considérée, Pe est le pas desdits éléments et Le est la largeur totale en projection longitudinale sur l'axe transversal des éléments de relief de ladite partie.

Pour différencier les angles des arêtes des éléments d'une partie de bord des arêtes des éléments d'une autre partie de bord, il est judicieux que les angles des arêtes des éléments de relief d'une partie de bord soient égaux ou plus grands que cet angle Be d'une quantité α (alpha) pouvant prendre toutes les valeurs entre 0 et 20 degrés, tandis que les angles des arêtes des éléments de relief de l'autre partie de bord soient égaux ou plus petits que cet angle Be d'une quantité P (beta) pouvant prendre toutes les valeurs entre 0 et 20 degrés. La somme des valeurs absolues de ces angles α (alpha) et P (beta) doit être au moins égale à 10 degrés et au plus égale à 20 degrés.

Si la somme des angles est inférieure à 10 degrés, la dissymétrie entre les éléments de relief d'une partie de bord et l'autre n'est pas suffisante pour avoir un effet sensible sur les vibrations liées à certaines formes d'empreinte de contact. Si la somme des angles est supérieure à 20 degrés, alors à pleine charge, les éléments de relief des parties bord redeviennent générateurs de vibrations.

Il est avantageux que sur la partie centrale, comprenant une pluralité d'éléments de relief répartis dans la direction circonférentielle avec un pas Pc égal à la circonférence mesurée au centre du pneumatique (point radialement le plus à l'extérieur) divisée par le nombre total de motifs de relief, la surface de contact des motifs de relief de ladite partie centrale défilant au travers d'une fenêtre de longueur égale au pas Pc soit constante (c'est-à-dire que l'écart relatif entre la valeur minimale et la valeur maximale de la surface totale au sol soit au plus de 5%).

Avec une bande de roulement selon l'invention, il est ainsi possible d'éviter le plus possible les coïncidences en entrée et en sortie du contact des arêtes des motifs de relief sur chaque bord épaule.

Par ailleurs, il est proposé une méthode de construction du dessin des éléments de relief d'une bande de roulement pour pneumatique d'engin de génie civil permettant de réduire sensiblement les vibrations du véhicule pendant le roulage, lesdites variations étant pour une grande part liées à la grande amplitude de variation de charge en usage, cette méthode comprenant les étapes suivantes :

- définir une partie centrale de largeur axiale Le de la bande de roulement sur laquelle on dispose dans la direction longitudinale une pluralité d'éléments de relief avec un pas Pc, ces éléments de relief étant séparés les uns des autres par des rainures, chacun de ces éléments de relief ayant des lignes d'arête d'attaque et de fuite qui sont inclinées avec la direction longitudinale de la bande de roulement d'un angle Ac tel que la relation soit satisfaite :

$$Ac = Arc\tan(\frac{Lc}{Pc})$$

- dans chacune des parties de bord axialement de part et d'autre de la partie centrale, on dispose une pluralité d'éléments de relief avec un pas Pe, ces éléments de relief étant séparés les uns des autres par des rainures, chacun de ces éléments de relief ayant des lignes d'arête d'attaque et de fuite qui sont inclinées avec la direction longitudinale de la bande de roulement d'un angle De pour une partie de bord et Ce pour une autre partie de bord, de manière à ce que les relations suivantes soient satisfaites :

$$De = Arctan(\frac{Le}{Pe}) + \alpha$$

$$Ce = Arctan(\frac{Le}{Pe}) + \beta,$$

les valeurs α (alpha) et β (beta) étant choisies entre -20 degrés et +20 degrés (bornes comprises), et de manière à ce que la somme des valeurs absolues desdits angles α et β soit au moins égale à 10 degrés et au plus égale à 20 degrés.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre les contours des empreintes de contact d'un pneumatique à charge nominale (traits pleins) et à 80% de sa charge nominale (traits pointillés) ;

La figure 2 montre une vue en plan des éléments de relief d'une bande de roulement selon l'art antérieur ;

La figure 3A montre une vue en plan des éléments de relief d'une variante d'une bande de roulement selon l'invention ; la figure 3B montre une superposition de deux éléments de relief de la bande de roulement montrée à la figure 3A ;

La figure 4A montre une variante de bande de roulement selon invention construite à partir de la variante de la figure 3A ;

La figure 4B montre une superposition de deux éléments de relief de la bande de roulement montrée à la figure 4A.

La figure 1 montre les contours 1, 2 superposés de l'empreinte de contact d'un pneumatique de dimension 26.5 R 25 gonflé à une pression de 4,5 bars et supportant des charges égales à 80% et 40% d'une charge nominale telle que définie pour cette dimension de pneumatique par les Normes E.T.R.T.O. de 2006. Cette charge nominale est dans le cas présent égale à 15000 kg. Le tracé en traits pleins 1 correspond à une charge de 12000 kg égale à 80% de cette charge nominale (condition de pleine charge) tandis que le tracé en pointillés 2 correspond à une charge de 6000 kg soit 40% de la charge nominale (condition à vide). En usage sur des engins de travaux tels des chargeuses (loaders), des tombereaux (dumpers) ou des décapeuses (scrapers), on constate que les pneumatiques de ces véhicules fonctionnent pour une part à pleine charge et pour une autre part sensiblement à vide. Les phases de pleine charge alternant avec les phases à vide.

Ces deux conditions de charges sont pleinement représentatives des conditions réelles d'usage.

Sur cette figure 1 on constate qu'il existe une partie centrale C de largeur Le pour laquelle les limites du contour de l'empreinte en entrée et en sortie du contact sont sensiblement parallèles à l'axe XX' (axe parallèle à l'axe de rotation du pneumatique). Cette largeur Le (égale à 200 mm pour l'exemple décrit) correspond à la largeur de la région médiane pour laquelle les longueurs d'empreinte mesurées dans une direction longitudinale perpendiculaire à la direction XX' varient de moins de 0.5% de la largeur W (égale à 580 mm) de l'empreinte sous condition de pleine charge. Sur cette figure 1, la différence Δ entre la longueur maximale Lmax et la longueur minimale Lmin est inférieure à 0.5 pour cent de la largeur W de l'empreinte.

Sur chaque partie de bord I, II, située axialement à l'extérieur de la partie centrale précédemment définie, la forme du contour de l'empreinte varie sensiblement, les formes géométriques se rapprochant davantage d'un trapèze (condition à vide) que d'un rectangle (condition de pleine charge). La largeur Le de chaque partie de bord est, dans le cas présent, égale à 190 mm.

La figure 2 représente l'empreinte de contact des éléments de relief 21 pour un pneumatique selon l'art antérieur, ledit pneumatique étant soumis à une charge de 80% de la charge nominale. À cette empreinte, on a superposé le contour de l'empreinte dans la condition de charge 40% de la charge nominale (tracé en traits pointillés) : on constate que sur les bords de l'empreinte, certaines des arêtes 22 des éléments de relief viennent en coïncidence avec les limites du contour de l'empreinte. Selon cet art antérieur les éléments de relief d'une partie de bord sont superposables géométriquement aux éléments de relief de l'autre partie de bord par une symétrie centrale. Dans ce cas le dessin de la sculpture de la bande de roulement est non directionnel (c'est-à-dire qu'il n'y a pas de direction préférentielle de roulage).

Une première variante de sculpture d'une bande de roulement selon l'invention est montrée en plan à la figure 3A. Cette bande de roulement destinée à un pneumatique de dimension 26.5 R 25, comprend une pluralité d'éléments de relief 30 s'étendant continûment et globalement dans la direction transversale (XX'), cette direction transversale étant parallèle à la direction de l'axe de rotation du pneumatique. Les éléments de relief 30 sont séparés les uns des autres dans la direction longitudinale (YY') (ou direction circonférentielle sur le pneumatique) par des rainures 36 en zigzag et d'orientation générale transversale.

Sur une partie centrale 33 de largeur Le égale à 200 mm, chaque élément de relief 30 comprend des arêtes 331, 332 rectilignes et parallèles entre elles et faisant un angle Ac avec la direction longitudinale. Les arêtes des éléments de relief de la partie centrale ont une largeur projetée sur l'axe transversal égale à la largeur Lc de ladite partie. Sur cette partie centrale, la différence des longueurs maximale et minimale d'empreinte pour les conditions à pleine charge et à vide (valeurs données précédemment pour la description de la figure 1) est inférieure à 0.5 pour cent de la largeur de la bande de roulement soit 2.9 mm (0.5 pour cent de 580 mm).

Le pas Pc entre deux éléments consécutifs dans la partie centrale est égal à la circonférence moyenne de chaque épaule divisée par le nombre total de motifs de relief. L'angle Ac est tel qu'il satisfait la formule suivante :

$$Pc = \frac{Lc}{tgAc}$$

Dans l'exemple présenté, le pas Pc est égal à 208.4 mm et l'angle Ac est donc égal à 43.9 degrés (angle mesuré par rapport à la direction longitudinale).

De part et d'autre de la partie centrale, on trouve une première partie de bord 31 (axialement sur le côté gauche de la figure) et une seconde partie de bord 32 (axialement sur le côté droit de la figure), ces deux parties ayant une même largeur Le égale à 190 mm.

Pour chaque partie de bord 31, 32, il est défini un angle moyen Be des éléments de relief 301, 302 respectivement, tel que

$Pe = \frac{Le}{tgBe}$, sachant que Pe, pas des motifs de relief sur chaque partie de bord, est égal à la circonférence moyenne de chaque partie de bord divisée par le nombre total de motifs de relief. La circonférence moyenne d'un bord est mesurée au milieu de chaque partie de bord. L'angle Be vaut ici 42.45 degrés.

Sur la première partie de bord 31, les éléments de relief 301 (correspondant à la partie de l'élément de relief 30 situé dans cette partie de bord) ont sur la surface de roulement (c'est-à-dire sur la surface externe de la bande destinée à venir en contact avec la chaussée pendant le roulage) la forme d'un parallélogramme et sont disposés avec un pas Pe égal à 207.7 mm. La disposition des éléments de relief sur cette première partie de bord est telle que, par rapport à une ligne virtuelle passant par le point d'intersection des lignes d'arêtes d'attaque d'un élément de ladite partie de bord et de l'élément de la partie centrale qui le prolonge axialement, lesdits éléments (élément de la partie de bord et de élément de la partie centrale) soient situés d'un même côté.

Chaque élément de relief 301 de la première partie de bord comprend une arête d'attaque 311 rectiligne et une arête de fuite 312 rectiligne, ces arêtes faisant un angle De égal à 46.9 degrés avec la direction longitudinale. Cet angle De des arêtes 311, 312 est égal à l'angle Be auquel est ajouté un angle alpha compris entre 0 et 20 degrés (dans le cas présent 4.45 degrés). L'arête d'attaque d'un élément de relief correspond à la première arête dudit élément de relief à rentrer dans l'empreinte de contact lorsque le pneumatique est en roulage. L'arête de fuite correspond à la dernière arête de l'élément de relief à sortir de l'empreinte de contact.

La seconde partie de bord 32 comprend une pluralité d'éléments de relief 302 (correspondant à la partie de l'élément de relief 30 situé dans cette partie de bord) dont la surface externe a la forme d'un parallélogramme. Le pas des éléments 302 de cette seconde partie 32 est identique à celui des éléments de la première partie soit 207.7 mm. Les arêtes d'attaque et de fuite 321, 322 de chaque élément de relief 302 de la seconde partie de bord font un angle Ce égal à l'angle Be diminué d'un angle beta compris entre 0 et 20 degrés (dans le cas présent 7.88 degrés). L'orientation pour les éléments de relief 302 de cette seconde partie est telle que lesdits éléments de relief forment un V avec la partie de l'élément de relief située dans la partie centrale. Les éléments de relief 302 de la seconde partie de bord 32 sont sensiblement orientés dans le même sens que les éléments de relief 301 de la première partie de bord 31, sans que toutefois les arêtes d'attaque et de fuite des éléments d'une partie de bord ne soient superposables aux arêtes des éléments de l'autre partie de bord comme le montre la figure 3B. Sur la figure 3B, les éléments de relief 301, 302 respectivement de la première et de la seconde parties de bord sont comparés après avoir fait subir une symétrie centrale à l'élément 301 : il est aisément visible que ces deux éléments de relief ont des géométries distinctes. Ceci permet d'assurer qu'il y aura un nombre réduit de coïncidences entre les géométries des arêtes et le contour de l'empreinte que ce soit à pleine charge ou à vide.

Par ailleurs, la somme des valeurs absolues des angles α (alpha) et β (beta) est comprise préférentiellement entre 10 et 20 degrés afin de générer une dissymétrie appropriée entre les deux parties de bord. Dans le cas présent, cette somme est égale à 12.33 degrés. De cette façon, chaque ligne d'arêtes 311, 312 des éléments de relief de la première partie de bord 31 n'est pas superposable aux lignes d'arêtes 321, 322 des éléments de relief de la seconde partie de bord 32.

Les relations ainsi fixées pour les parties de bord permettent d'assurer le passage d'une quantité sensiblement constante de matière en contact avec le sol, la surface totale de contact des éléments de relief des parties de bord passant dans une fenêtre virtuelle 37 de largeur égale à la largeur W de la bande de roulement et de longueur circonférentielle égale au pas Pe des éléments de relief des bords étant constante ou quasiment constante. Par constante ou quasiment constante, on entend que l'amplitude maximale de la variation de la surface totale est au plus de 5% de la valeur maximale de ladite surface totale. La surface totale de contact des motifs de relief est égale à la somme des surfaces des motifs de relief des première et seconde parties de bord et de la partie centrale. Ainsi, il est possible de maintenir une rigidité quasiment inchangée de la partie de la bande de roulement en contact avec le sol pendant le roulage du pneumatique tout en évitant que qu'un grand nombre d'arêtes des éléments de relief des parties de bord entrent en coïncidence avec les contours de l'empreinte que ce soit à pleine charge ou à vide.

Dans le cas qui a été décrit avec le support des figures 3A et 3B, les éléments de relief ont des arêtes d'attaque et de fuite qui sont parallèles sur chacun des bords. Comme variante, non représentée, on peut prévoir que l'arête d'attaque de chaque élément de relief fait un angle qui est différent de l'angle de l'arête de fuite dudit élément, sachant que ces angles sont déterminés à partir de l'angle moyen Be de l'élément de relief tel que défini précédemment par la relation entre la largeur de la partie bord et le pas :

$$Pe = \frac{Le}{tgBe}$$

Bien entendu, il est essentiel, dans le cas où les angles des arêtes d'attaque et de fuite d'un même élément de relief ne sont pas égaux, de satisfaire la condition selon laquelle la surface totale de contact passant dans une fenêtre virtuelle de largeur égale à la largeur de la bande de roulement et de longueur égale au pas des éléments de relief doit être constante.

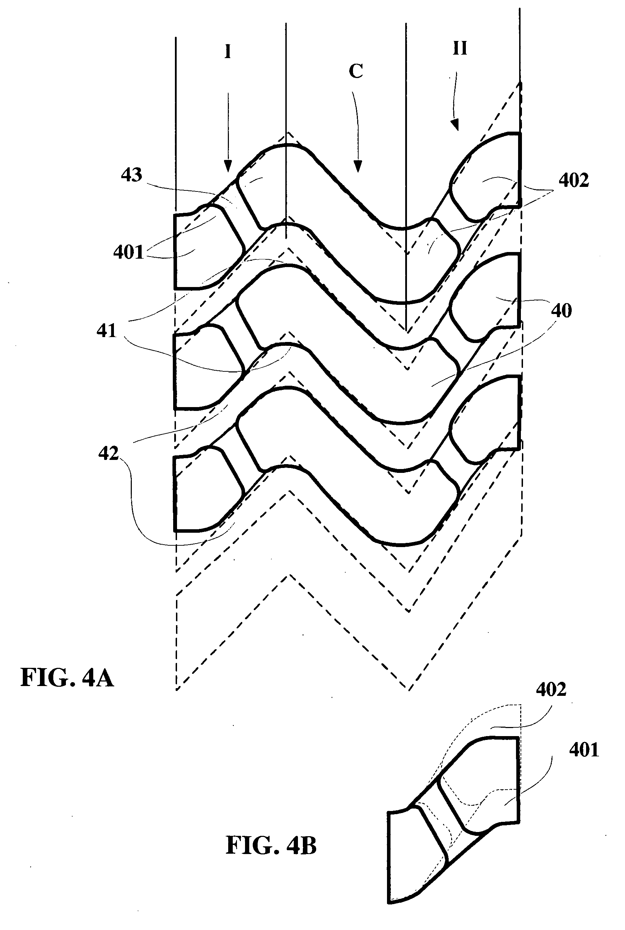

Dans une autre variante, représentée avec les figures 4A et 4B, les arêtes des éléments de relief peuvent avoir des orientations non rectilignes. On définit dans ce cas une direction moyenne d'une ligne d'arêtes d'un bloc par la droite moyenne de régression linéaire de la ligne d'arête (droite des moindres carrés).

Comme le montre la figure 4A, le dessin des éléments de relief 40 a été adapté, à partir du tracé des éléments de relief de la figure 3 (en traits pointillés sur la figure 4), pour tenir compte de contraintes liées aux autres performances requises en usage. Notamment, les pointes 41 desdits éléments de relief ont été arrondies pour obtenir des formes d'usures régulières et une réduction de la vitesse d'usure. Dans cet exemple, d'une bande de roulement pour un pneumatique de dimension 26.5 R 25, l'angle Ac vaut encore 43.9 degrés, et l'angle Be vaut 42.45 degrés. Par ailleurs, des rainures 43 de faible profondeur ont été réalisées sur chaque partie de bord.

Pour la première partie de bord 1, les éléments de relief 401 représentent une partie des éléments 40 ; la ligne d'arêtes d'attaque et la ligne d'arêtes de fuite comprennent chacune deux lignes disjointes dont la direction moyenne fait un angle de 46.9 degrés avec la direction longitudinale (en pointillés, trace de la géométrie des éléments de relief de la figure 3). Il est avantageux outre de prévoir un écart angulaire de quelques degrés entre l'arête d'attaque et l'arête de fuite d'un même élément.

Pour la seconde partie de bord II, les éléments de relief 401 représentent une partie des éléments 40 ; la ligne d'arêtes d'attaque et la ligne d'arêtes de fuite comprennent chacune deux lignes disjointes dont la direction moyenne fait un angle de 34.6 degrés avec la direction longitudinale. De même que pour la première partie de bord, il est avantageux outre de prévoir un écart angulaire de quelques degrés entre l'arête d'attaque et l'arête de fuite d'un même élément.

Sur la figure 4B, on a superposé les parties d'éléments de relief 401, 402 de chaque partie de bord : il est aisément visible que ces deux éléments de relief ont des géométries distinctes.

## Revendications

**1.** Bande de roulement pour pneumatique destiné à équiper des véhicules lourds comprenant une pluralité d'éléments de relief (30), cette bande de roulement étant divisée dans la direction axiale en trois parties, une partie centrale (33) et axialement de part et d'autre une première partie de bord (31) et une seconde partie de bord (32),
la partie centrale (33) de la bande de roulement a une largeur Le qui est déterminée comme la largeur de la région de la bande de roulement dont l'empreinte de contact présente, sous condition de charge égale à 0.40 fois la charge nominale E.T.R.T.O. et à pression nominale E.T.R.T.O., entre la longueur maximale de contact et la longueur minimale de contact, une différence au plus égale à 0.5% de la largeur totale W de l'empreinte,
la première et la seconde parties de bord (31, 32) comprenant des éléments de relief (30) disposés suivant un pas Pe correspondant à la circonférence moyenne du bord considéré et mesurée sur la partie médiane dudit bord au point radialement le plus à l'extérieur lorsque le pneumatique est monté sur sa jante nominale et gonflé à sa pression nominale divisée par le nombre d'éléments de relief sur le bord considéré,
les éléments de relief de chaque partie de bord présentant une ligne d'arêtes d'attaque (311, 321) et une ligne d'arêtes de fuite (312, 322),
la bande de roulement du pneumatique étant **caractérisée en ce que** :

- les lignes d'arêtes (311, 312) des éléments de relief de la première partie de bord (31) ont des profils qui ne sont pas superposables aux profils des lignes d'arêtes (321, 322) des éléments de relief de la seconde partie de bord (32), que se soit par symétrie centrale dans le cas d'une bande de roulement non directionnelle ou par symétrie axiale dans le cas d'une bande de roulement directionnelle,
- la différence entre la valeur absolue de l'angle de la direction moyenne de chaque ligne d'arêtes (311, 312) d'un élément de relief de la première partie de bord et chacune des valeurs absolues des angles des directions moyennes des lignes d'arêtes (321, 322) de chaque élément de relief de la seconde partie de bord est au moins égale à 10 degrés et au plus égale à 20 degrés,
- et **en ce que** la surface totale de contact des éléments de relief des parties de bord passant dans une fenêtre de longueur circonférentielle égale au pas Pe des éléments de relief des parties de bord est constante ou quasiment constante (l'écart relatif entre la valeur minimale et la valeur maximale de la surface totale au sol est au plus de 5%), cette surface totale de contact des éléments de relief étant égale à la somme des surfaces de contact des éléments de relief des première et seconde parties de bord.

**2.** Bande de roulement selon la revendication 1 **caractérisée en ce que** la partie centrale comprend une pluralité d'éléments de relief répartis dans la direction circonférentielle avec un pas Pc égal à la circonférence mesurée au centre du pneumatique (point radialement le plus à l'extérieur) divisée par le nombre total de motifs de relief et **en ce que** la surface de contact des motifs de relief de la partie centrale défilant au travers d'une fenêtre de longueur égale au pas Pc est constante (l'écart relatif entre la valeur minimale et la valeur maximale de la surface totale au sol est au plus de 5%).

**3.** Bande de roulement selon la revendication 1 ou la revendication 2 **caractérisée en ce que** les angles des arêtes des éléments de relief d'une partie de bord sont égaux ou plus grands à un angle Be d'une quantité $\alpha$ (alpha) pouvant prendre toutes les valeurs entre 0 et 20 degrés, tandis que les angles des arêtes des éléments de relief de l'autre partie de bord sont égaux ou plus petits que l'angle Be d'une quantité $\beta$ (beta) pouvant prendre toutes les valeurs entre 0 et 20 degrés, la somme des valeurs absolues de ces angles α (alpha) et β (beta) devant être au moins égale à 10 degrés et au plus égale à 20 degrés, l'angle Be étant déterminé par la relation suivante :

$$Be = Arc\tan\frac{Le}{Pe},$$ où Pe est le pas des éléments de la partie de bord considérée et Le est la largeur totale en projection longitudinale sur l'axe transversal des éléments de relief de ladite partie.

4. Méthode de construction du dessin des éléments de relief d'une bande de roulement permettant de réduire sensiblement les vibrations pendant le roulage liées à la forte variation de charge en usage, cette méthode comprenant les étapes suivantes :

- dans la partie centrale de largeur axiale Lc, on dispose une pluralité d'éléments de relief avec un pas Pc égal à la circonférence divisée par le nombre d'éléments de relief, chacun de ces éléments de relief ayant des lignes d'arête d'attaque et de fuite qui sont inclinées avec la direction longitudinale de la bande de roulement d'un angle Ac tel que la relation soit satisfaite :

$$Ac = Arc\tan\left(\frac{Lc}{Pc}\right)$$

- dans chacune des parties de bord axialement de part et d'autre de la partie centrale, on dispose une pluralité d'éléments de relief avec un pas Pe égal à la circonférence de chaque partie de bord divisée par le nombre d'éléments de relief, chacun de ces éléments de relief ayant des lignes d'arête d'attaque et de fuite qui font avec la direction longitudinale de la bande de roulement un angle De (Ce pour la seconde partie de bord) tel que les relations suivantes soient satisfaites :

$$De = Arctan\left(\frac{Le}{Pe}\right) + \alpha$$

$$Ce = Arctan\left(\frac{Le}{Pe}\right) + \beta,$$

les valeurs α (alpha) et β (beta) étant choisies entre -20 degrés et +20 degrés (bornes comprises), et de manière à ce que la somme des valeurs absolues desdits angles α et β soit au moins égale à 10 degrés et au plus égale à 20 degrés.

**Claims**

1. A tyre tread intended to be fitted on heavy vehicles, comprising a plurality of elements in relief (30), this tread being divided in the axial direction into three parts, a central part (33) and axially on either side a first edge part (31) and a second edge part (32), the central part (33) of the tread has a width Lc which is determined as the width of the region of the tread the contact patch of which has, in a load condition equal to 0.40 times the E.T.R.T.O. rated load and at E.T.R.T.O. rated pressure, between the maximum length of contact and the minimum length of contact, a difference at most equal to 0.5% of the total width W of the contact patch, the first and the second edge parts (31, 32) comprising elements in relief (30) arranged at a pitch Pe corresponding to the average circumference of the edge in question and measured over the median part of said edge at the radially outermost point when the tyre is mounted on its rated rim and inflated to its rated pressure divided by the number of elements in relief on the edge in question, the elements in relief of each edge part having a line of leading ridges (311, 321) and a line of trailing ridges (312, 322), the tread of the tyre being **characterised in that**:

   • the lines of ridges (311, 312) of the elements in relief of the first edge part (31) have profiles which cannot be superposed on the profiles of the lines of ridges (321, 322) of the elements in relief of the second edge part (32), be it by central symmetry in the case of a non-directional tread or by axial symmetry in the case of a directional tread,
   • the difference between the absolute value of the angle of the average direction of each line of ridges (311, 312) of an element in relief of the first edge part and each of the absolute values of the angles of the average directions of the lines of ridges (321, 322) of each element in relief of the second edge part is at least equal to 10 degrees and at most equal to 20 degrees,
   • and **in that** the total contact surface of the elements in relief of the edge parts passing through a window of a circumferential length equal to the pitch Pe of the elements in relief of the edge parts is constant or virtually constant (the relative deviation between the minimum value and the maximum value of the total surface on the ground is at most 5%), this total contact surface of the elements in relief being equal to the total of the contact surfaces of the elements in relief of the first and second edge parts.

**2.** A tread according to Claim 1, **characterised in that** the central part comprises a plurality of elements in relief distributed in the circumferential direction with a pitch Pc equal to the circumference measured at the centre of the tyre (radially outermost point) divided by the total number of motifs in relief, and **in that** the contact surface of the motifs in relief of the central part passing through a window of length equal to the pitch Pc is constant (the relative deviation between the minimum value and the maximum value of the total surface on the ground is at most 5%).

**3.** A tread according to Claim 1 or Claim 2, **characterised in that** the angles of the ridges of the elements in relief of an edge part are equal to or greater than an angle Be by a quantity $\alpha$ (alpha) which may adopt any value between 0 and 20 degrees, whereas the angles of the ridges of the elements in relief of the other edge part are equal to or smaller than the angle Be by a quantity $\beta$ (beta) which may adopt any value between 0 and 20 degrees, the total of the absolute values of these angles $\alpha$ (alpha) and $\beta$ (beta) having to be at least equal to 10 degrees and at most equal to 20 degrees, the angle Be being determined by the following relationship: $Be = Arc\tan\dfrac{Le}{Pe}$, where Pe is the pitch of the elements of the edge part in question and Le is the total width in longitudinal projection on the transverse axis of the elements in relief of said part.

**4.** A method for constructing the design of the elements in relief of a tread which makes it possible substantially to reduce the vibrations during travel which are linked to the great variation in loads in use, this method comprising the following steps:

- in the central part of axial width Lc, there is arranged a plurality of elements in relief with a pitch Pc equal to the circumference divided by the number of elements in relief, each of these elements in relief having lines of leading and trailing ridges which are inclined with the longitudinal direction of the tread by an angle Ac such that the relationship below is satisfied:

$$Ac = Arc\tan(\frac{Lc}{Pc})$$

- in each of the edge parts axially on either side of the central part, there is arranged a plurality of elements in relief with a pitch Pe equal to the circumference of each edge part divided by the number of elements in relief, each of these elements in relief having lines of leading and trailing ridges which form with the longitudinal direction of the tread an angle De (Ce for the second edge part), such that the following relationships are satisfied:

$$De = Arctan(\frac{Le}{Pe}) + \alpha$$

$$Ce = Arctan(\frac{Le}{Pe}) + \beta,$$

the values $\alpha$ (alpha) and $\beta$ (beta) being selected between -20 degrees and +20 degrees (including limits), and such that the total of the absolute values of said angles $\alpha$ and $\beta$ is at least equal to 10 degrees and at most equal to 20 degrees.

**Patentansprüche**

**1.** Laufstreifen für einen zur Bestückung von Schwerlastwagen bestimmten Luftreifen mit mehreren Reliefelementen (30), wobei dieser Laufstreifen in axialer Richtung in drei Teile geteilt ist, einen zentralen Teil (33) und axial zu beiden Seiten einen ersten Randteil (31) und einen zweiten Randteil (32), wobei der zentrale Teil (33) des Laufstreifens eine Breite Lc hat, die als die Breite des Bereichs des Laufstreifens festgelegt wird, dessen Kontaktabdruck, bei einem Lastzustand gleich 0.40 Mal die Nennlast E.T.R.T.O. und bei einem Nenndruck E.T.R.T.O., zwischen der maximalen Kontaktlänge und der minimalen Kontaktlänge eine Differenz höchstens gleich 0.5 % der Gesamtbreite W des Abdrucks hat, wobei der erste und der zweite Randteil (31, 32) Reliefelemente (30) enthalten, die gemäß einem Abstand Pe angeordnet sind, der dem mittleren Umfang des betrachteten Rands, der im Mittelteil des Rands am radial am weitesten außen liegenden Punkt gemessen wird, wenn der Luftreifen auf seine Nennfelge montiert und auf seinen Nenndruck aufgepumpt ist, dividiert durch die Anzahl von Reliefelementen auf dem betrachteten Rand entspricht, wobei die Reliefelemente jedes Randteils eine Vorderkantenlinie (311, 321) und eine Hinterkantenlinie (312, 322) haben, wobei der Laufstreifen des Luftreifens **dadurch gekennzeichnet ist, dass**:

• die Kantenlinien (311, 312) der Reliefelemente des ersten Randteils (31) Profile haben, die nicht auf die Profile der Kantenlinien (321, 322) der Reliefelemente des zweiten Randteils (32) aufgelegt werden können, weder durch zentrale Symmetrie im Fall eines nicht richtungsorientierten Laufstreifens, noch durch axiale Symmetrie im Fall eines richtungsorientierten Laufstreifens,

• wobei die Differenz zwischen dem Absolutwert des Winkels der mittleren Richtung jeder Kantenlinie (311, 312) eines Reliefelements des ersten Randteils und jedem der Absolutwerte der Winkel der mittleren Richtungen der Kantenlinien (321, 322) jedes Reliefelements des zweiten Randteils mindestens 10 Grad und höchstens 20 Grad beträgt,

• und dass die Gesamtkontaktfläche der Reliefelemente der Randteile, die durch ein Fenster einer Umfangslänge gleich dem Abstand Pe der Reliefelemente der Randteile geht, konstant oder praktisch konstant ist (wobei die relative Abweichung zwischen dem minimalen Wert und dem maximalen Wert der Gesamtfläche am Boden höchstens 5 % beträgt), wobei diese Gesamtkontaktfläche der Reliefelemente gleich der Summe der Kontaktflächen der Reliefelemente des ersten und des zweiten Randteils ist.

2. Laufstreifen nach Anspruch 1, **dadurch gekennzeichnet, dass** der zentrale Teil mehrere Reliefelemente enthält, die in Umfangsrichtung mit einem Abstand Pc gleich dem in der Mitte des Luftreifens gemessenen Umfang (radial am weitesten außen liegender Punkt) dividiert durch die Gesamtanzahl von Reliefmustern verteilt sind, und dass die Kontaktfläche der Reliefmuster des zentralen Teils, die durch ein Fenster einer Länge gleich dem Abstand Pc verläuft, konstant ist (die relative Abweichung zwischen dem minimalen Wert und dem maximalen Wert der Gesamtfläche am Boden beträgt höchstens 5 %).

3. Laufstreifen nach Anspruch 1 oder Anspruch 2, **dadurch gekennzeichnet, dass** die Winkel der Kanten der Reliefelemente eines Randteils gleich oder um eine Größe $\alpha$ (alpha) größer als ein Winkel Be sind, die alle Werte zwischen 0 und 20 Grad annehmen kann, während die Winkel der Kanten der Reliefelemente des anderen Randteils gleich oder um eine Größe $\beta$ (beta) kleiner als der Winkel Be sind, die alle Werte zwischen 0 und 20 Grad annehmen kann, wobei die Summe der Absolutwerte dieser Winkel $\alpha$ (alpha) und $\beta$ (beta) mindestens gleich 10 Grad und höchstens gleich 20 Grad sein muss, wobei der Winkel Be durch die folgende Beziehung bestimmt wird:

$$Be = Arc \ tan \ \frac{Le}{Pe},$$ wobei Pe der Abstand der Elemente des betrachteten Randteils und Le die Gesamtbreite in Längsprojektion auf die Querachse der Reliefelemente des Teils ist.

4. Verfahren zur Bildung des Musters der Reliefelemente eines Laufstreifens, das es ermöglicht, die Vibrationen während der Fahrt deutlich zu verringern, die mit der starken Laständerung im Betrieb verbunden sind, wobei dieses Verfahren die folgenden Schritte enthält:

- im zentralen Teil mit der axialen Breite Lc werden mehrere Reliefelemente mit einem Abstand Pc gleich dem Umfang dividiert durch die Anzahl von Reliefelementen angeordnet, wobei jedes dieser Reliefelemente Vorderkantenlinien und Hinterkantenlinien hat, die zur Längsrichtung des Laufstreifens um einen derartigen Winkel Ac geneigt sind, dass die folgende Beziehung erfüllt ist:

$$Ac = Arc \ tan(\frac{Lc}{Pc})$$

- in jedem der axial zu beiden Seiten des zentralen Teils liegenden Randteile werden mehrere Reliefelemente mit einem Abstand Pe gleich dem Umfang jedes Randteils dividiert durch die Anzahl von Reliefelementen angeordnet, wobei jedes dieser Reliefelemente Vorderkantenlinien und Hinterkantenlinien hat, die mit der Längsrichtung des Laufstreifens einen Winkel De (Ce für den zweiten Randteil) bilden, derart, dass die folgenden Beziehungen erfüllt sind:

$$De = Arc \ tan(\frac{Le}{Pe}) + \alpha$$

$$Ce = Arc \ tan \ (\frac{Le}{Pe}) + \beta$$

wobei die Werte $\alpha$ (alpha) und $\beta$ (beta) zwischen -20 Grad und +20 Grad (einschließlich der Grenzen) und so gewählt werden, dass die Summe der Absolutwerte der Winkel $\alpha$ und $\beta$ mindestens gleich 10 Grad und höchstens gleich 20 Grad ist.

FIG. 1

FIG. 2

FIG. 3A

FIG. 3B

**FIG. 4A**

**FIG. 4B**

**EP 2 054 245 B1**

## RÉFÉRENCES CITÉES DANS LA DESCRIPTION

**Documents brevets cités dans la description**

- EP 1120294 A